# EUROPÄISCHE PATENTSCHRIFT

(11) **EP 1 317 360 B1**
(45) Veröffentlichungstag und Bekanntmachung des Hinweises auf die Patenterteilung: **05.03.2008**
(21) Anmeldenummer: 01962990.6
(22) Anmeldetag: 01.09.2001
(51) Int. Cl.: B60L 13/00, E01B 25/00

(54) **TRÄGER**
SUPPORT
SUPPORT

(30) Priorität: 12.09.2000 DE 10045336; 22.12.2000 DE 10064724; 13.03.2001 DE 10111918; 30.04.2001 DE 10120909; 12.07.2001 DE 10133337; 12.07.2001 DE 10133318; 12.07.2001 DE 10133316
(43) Veröffentlichungstag der Anmeldung: 11.06.2003
(73) Patentinhaber: Max Bögl Bauunternehmung GmbH & Co. KG, 92301 Neumarkt (DE)
(72) Erfinder: REICHEL, Dieter, 92318 Neumarkt (DE); WAIDHAUSER, Ralf, 92318 Neumarkt (DE); LINDNER, Erich, 91275 Auerbach (DE)
(74) Vertreter: Bergmeier, Werner
(86) Internationale Anmeldenummer: PCT/EP2001/010100
(87) Internationale Veröffentlichungsnummer: WO 2002/022389

(56) Entgegenhaltungen:
- DE-A- 4 115 936
- DE-U- 29 809 580
- US-A- 5 027 713

## Beschreibung

Die vorliegende Erfindung betrifft einen Träger für einen Fahrweg eines spurgebundenen Fahrzeuges, insbesondere einer Magnetschwebebahn, aus Beton, insbesondere als Betonfertigteil, mit einem in Längsrichtung des Trägers verlaufenden ersten Gurt, daran angeordneten, ebenfalls in Längsrichtung des Trägers verlaufenden Stegen und mit einem am vom ersten Gurt beabstandeten Ende der Stege angeordneten zweiten Gurt, wobei an den im Querschnitt des Trägers voneinander beabstandeten Enden eines der Gurte Anbauteile zum Führen des Fahrzeuges anordenbar sind, sowie eine Schalung zur Herstellung eines entsprechenden Trägers.

Bekannt sind beispielsweise aus der WO 01/11142 A1 Träger für Magnetschwebebahnen mit einem Obergurt mit Stegen, bei welchen an den Obergurten mittels Konsolen die Führungselemente für das Fahrzeug angeordnet sind. Die Konsolen sind an dem Obergurt angeschraubt oder in diesen eingegossen. An den Konsolen sind die Statoren und die horizontalen und vertikalen Führungen des Fahrzeuges befestigt. Der Träger selbst besteht aus einem massiven Betonkörper oder in einer vorteilhafteren Ausgestaltung aus einem im Querschnitt hohlkasten-förmigen Bauteil.

Für eine wirtschaftliche Fertigung des Fahrweges für die Magnetschwebebahn sind die Träger teilweise über 30 Meter lang. Die Anforderungen an die Träger sind hinsichtlich ihrer Formgenauigkeit und Formstabilität sehr hoch, um die Funktionalität der Magnetschwebebahn überhaupt zu gewährleisten. Es wurde daher für diese Bauweise stets vorgesehen, daß der Träger sehr biege- und torsionssteif ist. Um ein noch besseres Verhalten des Trägers in Bezug auf die Führung der Magnetschwebebahn zu bewirken, wurde sogar vorgesehen Mehrfeldträger zu verwenden. Derartige formtreu vorgespannte Mehrfeldträger wurden entweder einstückig, oder meist aus Transportgründen, mehrteilig hergestellt und anschließend miteinander gekoppelt. Diese Bauteile sind zwar optimal für die Verwendung als Träger für Magnetschwebebahnen geeignet, die Herstellung ist aber aufgrund der Entformungsarbeiten des Hohlträgers sehr zeit- und damit kostenaufwendig, da nach dem Entformen der Hohlkörper Abschlußplatten angeordnet werden mußten oder in den Abschlußplatten Öffnungen vorgesehen waren, welche eine komplizierte innere Schaltung entnehmbar machten.

Aufgabe der vorliegenden Erfindung ist es somit, einen Träger für einen Fahrweg eines spurgebundenen Fahrzeuges, insbesondere einer Magnetschwebebahn zu schaffen, welcher die hohen Anforderungen einer Magnetschwebebahn erfüllen kann und trotzdem schnell und kostengünstig hergestellt werden kann.

Die Aufgabe wird gelöst durch einen Träger mit den Merkmalen der unabhängigen Ansprüche.

Erfindungsgemäß ist an jedem vom ersten Gurt beabstandeten Ende der Stege jeweils ein sich im wesentlichen zur Außenseite des Trägers erstrekkender zweiter Gurt angeordnet. Hierdurch wird ein Träger geschaffen, welcher für die meisten Anwendungsfälle eine ausreichende Torsionssteifigkeit hat, da die zweiten Gurte, welche meist als Untergurte dienen, derart ausgebildet sind, daß sie durch ihre ausgeprägte Quererstreckung zur Torsionssteifigkeit des Trägers beitragen.

Bei einer besonders vorteilhaften Ausführung der Erfindung entsteht zwischen den Stegen ein von der Seite der zweiten Gurte her offener Hohlraum. Sind die Stege im Bereich der zweiten Gurte weiter voneinander beabstandet als im Bereich des ersten Gurtes, so ist der Träger bei dessen Herstellung zumindest teilweise von der Seite der zweiten Gurte her entformbar. Dadurch ist der Träger schnell und kostengünstig herstellbar. Eine aufwendige Zerlegung einer inneren Schalung, um sie aus den Stirnseiten des Trägers entnehmen zu können, oder durch Entformschrägen im Zentrum des Trägers stark eingeschränkte Hohlräume sind somit vermeidbar.

Vorteilhaft hinsichtlich der Biegesteifigkeit des Trägers ist es, wenn der erste Gurt ein Obergurt und die zweiten Gurte Untergurte des Trägers sind. In besonderen Anwendungsfällen kann es aber auch umgekehrt sein.

Befindet sich der Querschnittsschwerpunkt des Trägers im Bereich der mittleren Querschnittshöhe, so wird bei keiner oder bei lediglich geringer Massenerhöhung des Trägers eine Erhöhung der Querschnittssteifigkeit erzielt. Dies bedingt eine Erhöhung der ersten Eigenfrequenz und gleichzeitig eine Reduktion der Durchbiegung aus Lasten, was sich auf die Fahrdynamik positiv auswirkt. Speziell die Quersteifigkeit und die Torsionssteifigkeit wird deutlich erhöht.

Bei der Herstellung des Trägers ist es auch nicht erforderlich nach dem Herstellen des Hohlraums eine weitere Platte an den Stirnseiten des Trägers anzubetonieren, um eine Verbindung bei Mehrfeldträgern schaffen zu können. Durch diesen weiteren Betoniervorgang wird die Herstellung des gesamten Trägers beim Stand der Technik deutlich gegenüber der vorliegenden erfinderischen Ausgestaltung des Trägers verlängert, da bei der vorliegenden Erfindung diese Abschlußplatten, wenn sie erforderlich sind, sofort mit vorgesehen werden können. Ein Abwarten des Abbindens des Betons des Trägers bis dann schließlich die Abschlußplatten betoniert werden können ist nicht mehr erforderlich.

Der Träger ist dementsprechend so hergestellt, daß die Entformung von den Längsseiten des Trägers und weitgehend ohne Zerlegen der Schalung erfolgen kann. Der Träger weist somit keinen geschlossenen Hohlraum auf, kann aber aufgrund seiner Gestaltung, insbesondere der sich zur Außenseite des Trägers erstreckenden Untergurte eine genügend hohe Torsionssteifigkeit aufbringen, so daß er als Träger für Magnetschwebebahnen geeignet ist und trotzdem die bisher bereits bewährten großen Spannweiten aufweist.

Ein weiterer Vorteil des erfindungsgemäßen Trägers bei der Herstellung besteht darin, daß die Bewehrung des Trägers außerhalb des Trägers vorgefertigt werden kann. Die weitgehend fertige Bewehrung kann dann beispielsweise hutartig auf die Innenschalung gesetzt werden. Darüber hinaus ist es durch die Form des Trägers und dessen Schalung möglich eine steifere Konsistenz des Betons beim Betonieren zu verwenden. Dies wirkt sich positiv auf die Betonqualität und die Kosten aus. Außerdem kann hochfester Beton oder hochfester Leichtbeton zur Anwendung kommen.

Vorteilhafterweise sind an den Enden des Trägers die Stege miteinander mittels Abschlußplatten verbunden. Die Abschlußplatten dienen einerseits der Erhöhung der Torsionssteifigkeit. Andererseits sind sie dafür vorgesehen einen Anschluß an benachbarte Träger zu ermöglichen. Der Anschluß an benachbarte Träger kann derart sein, daß eine weitgehend feste Verbindung geschaffen wird, wodurch zwei oder mehrere Träger als Mehrfeldträger wirken.

Besonders vorteilhaft ist es, wenn die Abschlußplatten derart ausgebildet sind, daß sie die Lager für den Träger aufnehmen. Hierdurch ist eine vorteilhafte Krafteinleitung von den Trägern in die Stützen, auf welchen die Träger aufgelagert sind, möglich.

Eine weitere Erhöhung der Torsionssteifigkeit des Trägers wird dadurch erzielt, daß in dem Hohlraum wenigstens ein die Stege miteinander verbindendes Schott angeordnet ist. Durch das Schott wird vermieden, daß eine Bewegung der Stege und Untergurte zueinander erfolgt. Durch die Stege wird somit die Torsionssteifigkeit des Trägers weiter erhöht. Je nach Bedarf können mehrere Schotten vorgesehen sein, wodurch sich jeweils die Torsionssteifigkeit des Trägers weiter erhöht. Die Schotten sind vorteilhafterweise in weitgehend gleichmäßigen Abständen zueinander angeordnet. Als besonders torsionssteifer Träger wird ein Träger mit drei Schotten erhalten. Die Schotten können dabei jeweils im Trägerquerschnitt vollständig den Hohlraum des Trägers ausfüllen. In anderen Ausführungsformen kann auch vorgesehen sein, daß die Schotten Öffnungen aufweisen oder lediglich als Streben ausgebildet sind, so daß Öffnungen entstehen, durch welche Versorgungsleitungen oder Spanneinrichtungen verlaufen können.

Besonders vorteilhaft ist es, wenn die Schotten im Bereich einer Quervorspannung des Trägers, und/oder im Bereich der Anbauteile, insbesondere Konsolen zum Führen des Fahrzeuges angeordnet sind. Hierdurch wird der Träger in den Bereichen, in denen beispielsweise die Anbauteile mittels Konsolen am Träger befestigt sind, verstärkt. Es wird ein geschlossener Kraftflußohne wesentlicher Erhöhung des Gesamtgewichts des Trägers erhalten.

Ausreichend für eine genügende Festigkeit des Trägers kann es häufig sein, wenn die Schotten lediglich einen Teil der Stege miteinander verbinden. Auch hierdurch wird Gewicht und damit Material für den Träger eingespart.

Um eine außerordentlich hohe Torsionssteifigkeit zu erlangen, kann vorteilhafterweise vorgesehen sein, daß die zweiten Gurte, insbesondere die Untergurte im Bereich des Hohlraums zumindest teilweise durch eine, nach dem Herstellen des Trägers, angeordnete Bodenplatte miteinander verbunden sind. Die Bodenplatte kann entweder den Hohlraum komplett abschließen, so daß wiederum ein geschlossener Hohlkörper entsteht. Es kann in vielen Anwendungsfällen aber bereits ausreichend sein, daß die Bodenplatte lediglich abschnittsweise an dem Träger angeordnet ist. Dies kann bereits eine ausreichende Torsionssteifigkeit ergeben, wodurch die Herstellung, der Bodenplatte wiederum vereinfacht ist.

Vorteilhafterweise wird die Bodenplatte betoniert. Es kann hierbei vorgesehen sein, daß an den Stegen bzw. Untergurten Verbindungseisen aus dem Beton des Trägers ragen, an welchen die Bodenplatte angeschlossen bzw. anbetoniert wird. Es entsteht somit eine innige Verbindung zwischen der Bodenplatte und dem Träger. Diese Verbindung ist derart, daß wiederum eine torsionsfeste Form des Trägers erhalten wird, welche den hohen Anforderungen beim Bau von Trägern für Magnetschwebebahnen besonders gerecht wird.

Alternativ ist die Bodenplatte aus Metall oder Kunststoff, insbesondere als eine -Rahmen-Konstruktion hergestellt. Dies kann eine vereinfachte Montage und Demontage der Bodenplatte an dem Träger ermöglichen.

Ist die Bodenplatte zumindest teilweise tragend ausgebildet, so wird die Torsionssteifigkeit des Trägers weiter erhöht.
Sind im Träger Vorspannelemente angeordnet, so ist eine für den vorgesehenen Einsatzzweck ausreichende Biegesteifigkeit des Trägers zu erzielen.

Besonders vorteilhaft ist es, wenn in den Außenbereichen der Gurte eine Spannbewehrung angeordnet ist. Durch die Spannbewehrung, insbesondere wenn sie auch bei oder nach der Montage des Trägers noch nachjustierbar, also ohne Verbund ist, kann der Träger in y- und z-Richtung verformt und damit sehr exakt justiert werden. Für die Nachjustierung ist es vorteilhaft, wenn auch nach der Montage der Träger die Spannstellen, beispielsweise in den Hohlräumen der Träger zugänglich sind.

Vorteilhafterweise wird der Hohlraum des Trägers genutzt um zentrische Spannglieder anzuordnen. Die Spannglieder sind darin in vorteilhafter Weise zu führen. Außerdem können die zentrischen Spannglieder darin auf einfache Weise thermisch isoliert werden. Hierdurch ist der Temperaturgradient des Träger vorteilhafterweise beeinflußbar und die thermische Verformung des Trägers gegenüber herkömmlichen Trägern deutlich reduzierbar.
Zum Spannen der Vorspannelemente ist vorteilhafterweise vorgesehen, daß in wenigstens einer der Abschlußplatten, insbesondere im Bereich des Hohlraumes, Spann-Nischen vorgesehen sind.

Um ein Abstützen von Spannpressen für die Vorspannelemente zu ermöglichen, weisen vorteilhafterweise die Abschlußplatten, insbesondere im Bereich des Hohlraumes, Stahlplatten auf.

Ist der Träger Teil eines Mehrfeldträgers, wobei mehrere Träger formtreu vorgespannt miteinander verbunden sind, so wird ein besonders tragfähiges und toleranzgenaues Bauwerk geschaffen.

Sind Ober- und/oder Untergurt bezüglich des Fahrzeuges strömungsgünstig, unter weitgehender Vermeidung von dem Fahrzeug zugewandten Querschnittsveränderungen, ausgebildet, so ist der Träger nicht nur erfindungsgemäß biege- und torsionssteif, sondern ermöglicht darüber hinaus, daß die mit extrem hohen Geschwindigkeiten auf dem Träger fahrende Magnetschwebebahn mit möglichst geringen Strömungswiderständen oder Strömungsstößen sehr komfortabel betrieben werden kann. Darüber hinaus trägt eine derartige Gestaltung der Energieeinsparung beim Betrieb des Fahrzeuges bei.

Wird der Träger derart gestaltet, daß die sonnenbeschienenen Flächen und/oder Massen des Trägers an dem ersten Gurt und die an den zweiten Gurten einander ähnlich sind, so wird in besonders vorteilhafter Weise erreicht, daß ein niedriger Temperaturgradient innerhalb des Trägers vorhanden sein wird. Dies bedeutet, daß die Erwärmung des Trägers im Bereich des ersten Gurtes und im Bereich der zweiten Gurte weitgehend gleichmäßig erfolgt und somit vermieden wird, daß der erste Gurt oder die zweiten Gurte eine höhere Ausdehnung erfahren als die jeweils anderen Gurte. Eine Biegung des Trägers auf Grund unterschiedlicher Erwärmung ist somit weitgehend zu vermeiden.

Zur Unterstützung einer gleichmäßigen Erwärmung und Ausdehnung des Trägers ist vorgesehen, daß zumindest Teile der Außenseite des Trägers eine wärmeabsorbierende oder reflektierende Oberfläche aufweisen. Hierdurch kann beispielsweise eine unterschiedliche Sonnenbestrahlung der einzelnen Teile des Trägers ausgeglichen werden, so daß wiederum eine gleichmäßige Ausdehnung des Trägers erfolgt.

Die wärmeabsorbierende und/oder reflektierende Oberfläche kann auf den Träger in Form eines Anstrichs aufgebracht werden. Hierdurch sind die unterschiedlichen thermischen Eigenschaften des Trägers sehr einfach zu erhalten.

Werden zumindest Teilen der Außenseite des Trägers Beschattungselemente zugeordnet, so ist auch durch diese Maßnahme ein niedriger Temperaturgradient des Trägers zu erhalten. Die Betriebseigenschaften des Trägers sind damit auf die verschiedensten Sonnenbestrahlungen einstellbar.

Dadurch, daß die zweiten Gurte relativ weit über die seitlichen Stege hinausragen, können sie als Fahrweg für weitere Fahrzeuge, insbesondere Inspektions- oder Hilfsfahrzeuge genutzt werden. Die Fahrzeuge können dabei auf der Oberseite der zweiten Gurte fahren und beispielsweise Anbauteile für die Magnetschwebebahn kontrollieren oder vermessen. Es kann aber auch der erste Gurt als derartiger Fahrweg genutzt werden.
1. In erfinderischer Weise ist bei einem Träger der zuvor beschriebenen Art vorgesehen, daß zwischen erstem Gurt und zweitem Gurt bzw. zweiten Gurten Mittel zum Wärmeausgleich, insbesondere zum Wärmetausch vorgesehen sind. Wird der Träger durch beispielsweise Sonnenbestrahlung unterschiedlich erwärmt, so würde er sich auf Grund des dadurch entstehenden Temperaturgradienten unerwünscht verformen. Die exakt ausgerichteten Anbauteile hätten nicht mehr die erforderliche Genauigkeit, so daß der Betrieb beispielsweise einer Magnetschwebebahn nicht sicher gewährleistet werden könnte. Durch die Anordnung von Wärmeausgleichs- oder Wärmeaustauschmittel ist es nunmehr möglich, daß beispielsweise bei einem stärker erwärmten ersten Gurt die hierbei entstehende Wärme dem zweiten Gurt zugeführt wird, wodurch dieser ebenfalls erwärmt wird und sich in ähnlicher Weise ausdehnt wie der erste Gurt. Die Wärme kann gezielt in die Bereiche des Trägers geführt werden, welche voraussichtlich weniger erwärmt werden oder welche eine höhere Masse aufweisen und somit längere Zeit für eine Erwärmung benötigen würden. Hierzu ist vorteilhafterweise ein Steuerungs- oder Regelungssystem, insbesondere mit Sensoren und Pumpen vorgesehen.

Als Mittel zum Wärmeausgleich haben sich Leitungen mit WärmeträgerFlüssigkeit, insbesondere Öl erwiesen. Über diese Leitungen wird die Wärme von stärker erwärmten Bereichen des Trägers in weniger erwärmte Bereiche des Trägers transportiert. Der Transport durch die Leitungen kann aktiv mittels Pumpen oder passiv mittel der Schwerkraft erfolgen.

Als aktive Mittel für einen Wärmeausgleich sind Kühl-und/oder Heizelemente vorteilhaft. Diese Kühl- und/oder Heizelemente, welche beispielsweise über Solarzellen betreibbar sind, können ebenfalls bei Bedarf den Temperaturgradienten innerhalb des Trägers niedrig halten und somit Verformungen des Trägers weitgehend vermeiden.

Erfindungsgemäß wird weiterhin für die Herstellung eines Trägers eines Fahrwegs für ein spurgebundenes Fahrzeug, insbesondere eine Magnetschwebebahn eine Schalung vorgeschlagen, welche aus einzelnen Modulen zusammengesetzt ist, so daß durch Auswechslung einzelner Module eine Vielzahl unterschiedlicher Träger herstellbar ist. Besonders beim Bau von Magnetschwebebahnen setzt sich der Fahrweg aus einer Vielzahl aneinandergesetzter Träger zusammen. Diese Träger haben im Wesentlichen dieselbe Form. Je nach Umgebungsbedingungen, in welchen die Träger aufgestellt werden oder der speziellen Trassenführung sind individuelle Unterschiede der Träger erforderlich. Durch die vorgeschlagene Schalung ist es nun möglich, daß Träger, welche grundsätzlich die gleiche Gestalt haben durch Austausch einzelner Module individualisiert werden können. Durch die Modulbauweise ist eine sehr schnelle Fertigung der Träger möglich, da der Umbau der Schalung von der einen Form zu der nächsten Form sehr schnell realisierbar ist. Die Modulbauweise der Schalung kann sowohl den Längsals auch den Querschnitt des Trägers betreffen.

Als vorteilhaft hat sich erwiesen, daß die Schalung aus einem Grundrahmen, einem damit verbundenen austauschbaren Kernstück und einer beweglichen Seitenschalung besteht. Weitere Elemente der Schalung können für die Auflagerkonsolen vorgesehen sein sowie die Stirnschalung sein. Mit diesen einzelnen Elementen, welche gegebenenfalls nochmals in Teilmodule unterteilt sind, ist eine sehr flexible individuelle Herstellung abgewandelter Träger zu erhalten.

Besonders vorteilhaft ist es, wenn die Module zum Längenausgleich bei der Entspannung der Spannglieder während des Entformens verschieblich miteinander verbunden sind. Wird beim Entformen des Trägers die Spannung der Spannglieder nachgelassen, so wird der Beton des Trägers gepreßt und verkürzt sich damit. Hierdurch kann es zu einer Klemmung der Schalung in dem Betonteil kommen. Um dies zu vermeiden, sind die Module verschieblich miteinander verbunden, so daß eine Entformung der Schalungsmodule auch bei entspannten Spanngliedern noch möglich ist.

Durch das Einsetzen unterschiedlicher Module für verschiedene Auflagerkonsolen ist es möglich, einen Träger an die vorgegebene Trassierung anzupassen. Träger, welche auf unterschiedlichen Stützen gelagert sind, können durch variable Auflagerkonsolen in der gewünschten Lage montiert werden.

Die Auflagerkonsolen, welche je nach Bedarf horizontale, schräge oder zueinander versetzte Lager bzw. Lagerplatten aufweisen, sind sehr schnell und individuell herzustellen.

Vorteilhafterweise haben die Module im Bereich der Auflagerkonsolen Aussparungen mit Verguß- und Entlüftungsöffnungen zur Aufnahme der Lagerung.

Durch beispielsweise unterschiedlich lange Kerne oder Seitenteile können unterschiedliche Trägerlängen durch die erfindungsgemäße Modulbauweise der Schalung ohne großen Umbauaufwand der Schalung hergestellt werden. Insbesondere wenn die Kernstücke aus weiteren Teilmodulen bestehen, so ist es unter Umständen lediglich erforderlich, einzelne innere Modulstücke zu entfernen und die Endstücke aneinander zu setzen. Hierdurch wird auf eine sehr einfache Weise ein längenveränderter Träger hergestellt.

Durch unterschiedliche Gestaltungen der Kernteile ist es sehr einfach möglich, unterschiedliche Hohlraumgestaltungen zu schaffen. So können beispielsweise je nach Bedarf unterschiedliche Radien oder Verstärkungen in dem Hohlraum vorgesehen werden, wodurch auf unterschiedliche Belastungsfälle sehr individuell hergestellte Träger geschaffen werden können.

Besonders vorteilhaft ist es, wenn die Module hinsichtlich Anzahl, Form und Größe unterschiedliche Schotten ermöglichen. Auch hierdurch ist eine individuelle Anpassung der Träger an unterschiedliche Bedingungen sehr einfach zu schaffen.

Weitere Vorteile der Erfindung sind in den nachfolgenden Ausführungsbeispielen beschrieben. Es zeigen
- **Figur 1**: einen Querschnitt eines Trägers;
- **Figur 2**: einen Längsschnitt eines Trägers ohne Schott;
- **Figur 3**: einen Längsschnitt eines Trägers mit einem Schott;
- **Figur 4**: einen Längsschnitt eines Trägers mit zwei Schotten;
- **Figur 5**: einen Längsschnitt eines Trägers mit kurzen Schotten;
- **Figur 6**: einen Querschnitt eines weiteren Trägers ;
- **Figur 7**: einen Querschnitt eines weiteren Trägers ;
- **Figur 8**: eine skizzierte Schalung mit einem Träger;
- **Figur 9**: ein alternatives Kernstück;
- **Figur 10**: einen Längsschnitt eines Trägers mit dessen Schalung;
- **Figur 10a**: einen Längsschnitt eines Trägers mit alternativer Schalung;
- **Figur 11**: einen Querschnitt eines Trägers mit dessen Schalung;
- **Figur 11a**: einen Querschnitt eines Trägers mit alternativer Schalung
- **Figur 12**: einen Querschnitt eines weiteren Trägers;
- **Figur 13**: einen Längsschnitt des Trägers aus Fig.12;
- **Figur 14 und 15**: einen Querschnitt weiterer Träger.

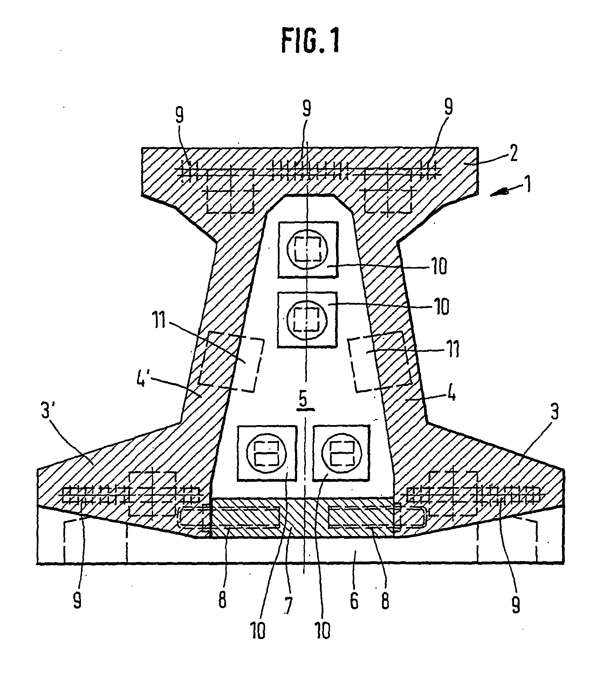

In Figur 1 ist ein Querschnitt eines erfindungsgemäßen Trägers 1 dargestellt. Der Träger 1 weist einen Obergurt 2 sowie zwei Untergurte 3 und 3' auf. Obergurt 2 und Untergurte 3, 3' sind jeweils mit einem Steg 4 bzw. 4' miteinander verbunden. An den Obergurten 2 werden in nicht dargestellter Weise beispielsweise Konsolen angeordnet, an welchen Funktionselemente zum Führen eines spurgebundenen Fahrzeuges befestigt werden. Der Träger 1 ist ein Betonfertigteil, welches im wesentlichen fertig betoniert und gegebenenfalls fertig- oder vormontiert an die Baustelle geliefert wird.

Die Untergurte 3 und 3' erstrecken sich ausgehend von den Stegen 4, 4' in Richtung zur Außenseite des Trägers 1. Hierdurch wird für einen an sich offenen Träger 1 eine relativ hohe Torsionssteifigkeit erzielt. Die Untergurte 3 und 3' sind sehr massiv ausgebildet, so daß die Torsionssteifigkeit hierdurch zusätzlich erhöht wird. An den Stirnseiten des Trägers 1 sind die Stege 4, 4' mit einer Abschlußplatte 5 verbunden. Die Abschlußplatte 5 verhindert zusammen mit den ausgeprägten Untergurten 3, 3' und der Verbindung der Stege 4, 4' über den Obergurt 2, daß sich der Träger trotz großer Baulängen bei einer Überfahrt eines Fahrzeuges unzulässig verwindet.

Im Bereich der Abschlußplatte 5 ist eine Auflagerkonsole 6 vorgesehen, welche mit nicht dargestellten Lagern und Stützen zusammenwirkt. Der Träger 1 kann somit positionsgenau auf einem entsprechenden Unterbau gelagert werden.

Um einen besonders torsionssteifen Träger 1 zu schaffen, welcher einen Hohlraum zwischen den Stegen 4, 4' aufweist, und welcher trotzdem sehr einfach und schnell herzustellen ist, weist der Träger 1 aus Figur 1 eine zusätzliche Bodenplatte 7 auf. Die Bodenplatte 7 erstreckt sich zwischen den Untergurten 3 und 3' und ist mit diesen über eine Bewehrung 8 verbunden. Die Bodenplatte 7, welche ebenfalls aus Beton hergestellt ist, wird nach dem Herstellen des eigentlichen Trägers 1 in eine aus dem Träger 1 überstehende Bewehrung 8 einbetoniert. Dies kann beispielsweise auch nach Einbringung verschiedener Einbauteile in dem Träger erfolgen, wodurch die Zugänglichkeit des Hohlraums des Trägers 1 für Montagezwecke gegeben ist. Die Bodenplatte 7 ist im vorliegenden Ausführungsbeispiel fest mit dem Träger 1 verbunden. Alternativ ist es auch möglich, daß die Bodenplatte 7 beispielsweise eingeschraubt ist oder anderweitig lösbar oder unlösbar mit dem Träger 1 verbunden ist. Wichtig ist in jedem Falle, daß die Bodenplatte 7 den Träger 1 bezüglich seiner Torsionssteifigkeit verstärkt.

Zur Erhöhung der Festigkeit des Trägers 1 ist in dem Obergurt 2 und in den Untergurten 3, 3' eine weitere Bewehrung 9 angeordnet. Der Träger 1 kann darüber hinaus beispielsweise auch aus Faserbeton hergestellt sein, wodurch eine zusätzliche Festigkeit erzielt wird.

In der Abschlußplatte 5 sind Vorkehrungen für die Verbindung des Trägers 1 mit weiteren Trägern geschaffen. Außerdem sind Aufnahmen für Vorspannelemente vorgesehen. Abschlußplatten 5 dienen zur Abstützung von Spannpressen für die Vorspannelemente, durch welche der Träger 1 in die vorbestimmte Form hinsichtlich seiner Durchbiegung gebracht wird. In den Spann-Nischen 11 werden ebenfalls Elemente zum Spannen des Trägers 1 oder zum Verbinden mehrerer Träger 1 vorgesehen.

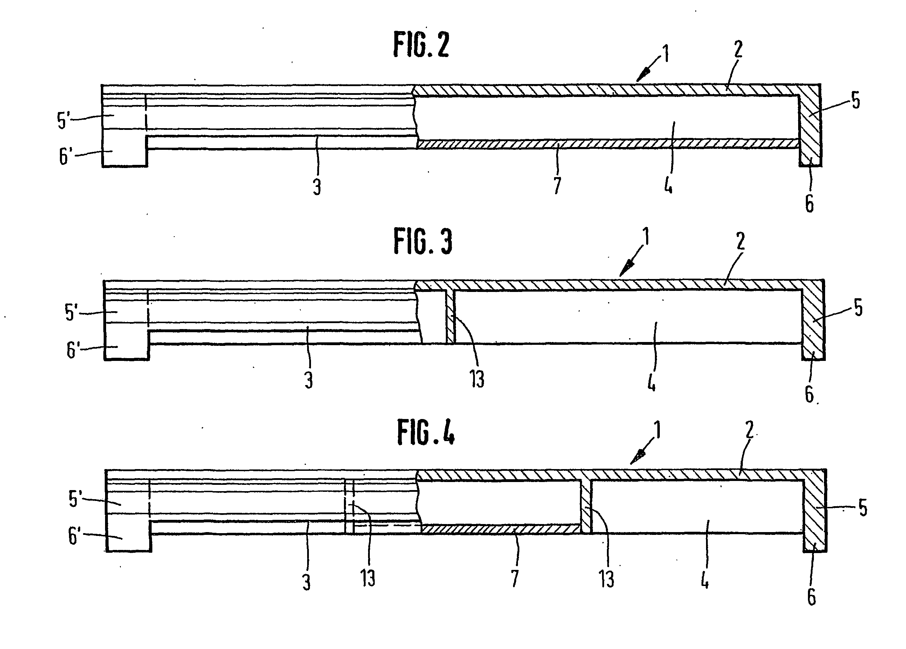

In Figur 2 ist eine teilweise geschnittene Seitenansicht eines Trägers 1 dargestellt. Der Obergurt 2 und der Steg 4 sind einstückig mit den Abschlußplatten 5, 5' verbunden. An den Abschlußplatten 5, 5' sind die Auflagerkonsolen 6, 6' angeordnet. Die Abschlußplatten 5, 5' sowie die Auflagerkonsolen 6, 6' sind unterschiedlich dick ausgebildet. An der dünneren Abschlußplatte 5 wird der Träger 1 mit einem weiteren Träger gekoppelt, wodurch bei entsprechender Koppelung ein Mehrfeldträger entsteht.

Im Bereich der Untergurte 3 ist die Bodenplatte 7 angeordnet. Bei dem Ausführungsbeispiel der Figur 2 schließt die Bodenplatte 7 den Zwischenraum zwischen den Stegen 4, 4' vollständig ab und reicht von einer Abschlußplatte 5 bis zur anderen Abschlußplatte 5'. Hierdurch entsteht ein geschlossener Hohlraum des Trägers 1, welcher erst nach der Herstellung des eigentlichen Trägers 1 geschaffen wird. Ein derartiger Träger 1 weist eine Torsionssteifigkeit auf, welche im wesentlichen der Steifigkeit herkömmlicher Träger entspricht.

In Figur 3 ist ein Träger 1 in Seitenansicht dargestellt, welcher keine Bodenplatte 7 aufweist. Zur Versteifung des Trägers 1 ist ein Schott 13 vorgesehen, welches mittig in dem Träger 1 angeordnet ist. Das Schott 13 verbindet die Stege 4, 4' sowie die Untergurte 3, 3' miteinander, wodurch eine Verschiebung der Stege 4, 4' und Untergurte 3, 3' zueinander weitgehend vermieden wird. Ein derartiger Träger 1 ist hinsichtlich seiner Torsionssteifigkeit in vielen Fällen ausreichend für den vorgesehenen Einsatz als Träger für Magnetschwebebahnen.

In Figur 4 ist ein weiteres Ausführungsbeispiel der Erfindung dargestellt. Hierbei weist der Träger 1 zwei Schotten 13 auf. Zwischen den beiden Schotten 13 ist eine Bodenplatte 7' angeordnet. Diese Bodenplatte 7' reicht lediglich von einem Schott 13 bis zum anderen Schott 13. Die Bereiche zwischen Schott 13 und den Abschlußplatten 5, 5' sind dagegen ohne Bodenplatte ausgeführt. Ein derartiger Träger 1 weist eine gegenüber dem Träger der Figur 3 erhöhte Torsionssteifigkeit auf. Alternativ ist es auch möglich die Bodenplatte 7 in den Bereichen zwischen Schott 13 und Abschlußplatte 5, 5' anzuordnen oder sie unabhängig von der Position der Schotten 13 einzusetzen.

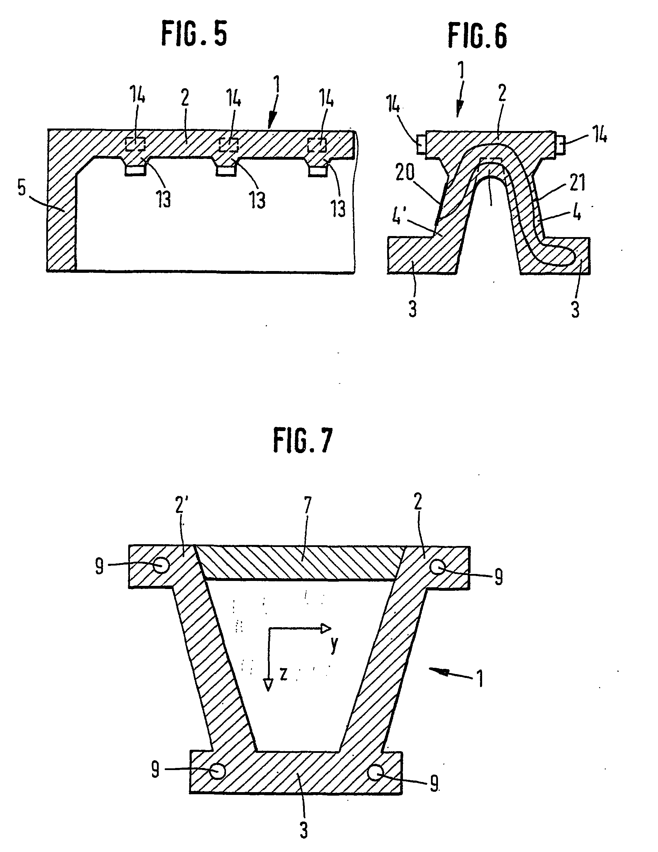

Figur 5 zeigt einen Teil eines Längsschnitts eines Trägers mit kurzen Schotten 13. Die Schotten 13 sind lediglich im oberen Bereich des Hohlraums des Trägers 1 angeordnet. An den Enden des Obergurtes 2 sind im Bereich der Schotten 13 Konsolen 14 vorgesehen, an welchen die nicht dargestellten Anbauteile für die Führung des Fahrzeuges befestigt werden. Die Konsolen 14, welche mittels Spannstählen in dem Beton des Obergurts 2 verankert sind, bewirken über die Schotten 13 eine hervorragende Krafteinleitung in den Träger 1. Die Schotten 13 bewirken hierdurch neben der Erhöhung der Steifigkeit des Trägers 1 auch eine optimierte Befestigung der Fahrzeugführungen an dem Träger 1.

In Figur 6 ist ein weiteres Ausführungsbeispiel eines Trägers 1 dargestellt. Die Untergurte 3 und 3' des Trägers 1 sind derart ausgebildet, daß deren Oberseiten als Fahrweg für ein Inspektions- oder Montagefahrzeug dient. Auf der Oberseite der Untergurte 3, 3' ist ausreichend Platz, um eine Fahrbahn für das Fahrzeug zur Verfügung stellen zu können.

Die Schotten 13, welche der Darstellung der Figur 5 als Schnittdarstellung entsprechen, befinden sich lediglich im oberen Bereich des Hohlraums und unterstützen auf diese Weise den Kraftfluß, welcher über die Konsolen 14 in den Träger 1, die Stege 4, 4' und die Untergurte 3, 3' eingeleitet werden.

Gemäß Figur 6 sind an dem Steg 4' Solarzellen 20 angeordnet. Bei dieser Ausführung ist angenommen, daß der Steg 4' der Sonnenbestrahlung stärker ausgesetzt ist als der Steg 4. Hierdurch ist zu erwarten, daß sich die Seite des Stegs 4' stärker erwärmt und somit zu einer Verformung des Trägers 1 führen würde, wenn kein Wärmeausgleich stattfinden würde. Dieser Wärmeausgleich wird mit Hilfe der Solarzellen 20 und einer damit verbundenen Leitung 21 bewirkt. Die Leitung 21 fördert eine Wärmeträgerflüssigkeit von der sonnenbeschienenen Seite auf die im Schatten liegende Seite des Trägers 1. Hierdurch wird der Steg 4 und der Untergurt 3 ebenfalls erwärmt. Dies wiederum führt dazu, daß die Wärmeausdehnung auf beiden Seiten des Trägers 1 ähnlich ist und somit die Verformung des Trägers 1 in einem tolerierbaren Bereich liegt. Ein ähnlicher Wärmeausgleich kann zwischen Obergurt 2 und den Untergurten 3, 3' stattfinden, wenn ein Wärmetransport beispielsweise vom Obergurt 2 zu den Untergurten 3, 3' durch eine entsprechende Verlegung der Leitungen 21 erfolgt. Alternativ zu den dargestellten Solarzellen 20 ist es möglich, die Isolierung oder Wärmeabsorption des Trägers mittels Anstrichen, Wärmedämmelementen, Kühl- oder Heizelementen sowie Beschattungseinrichtungen durchzuführen.

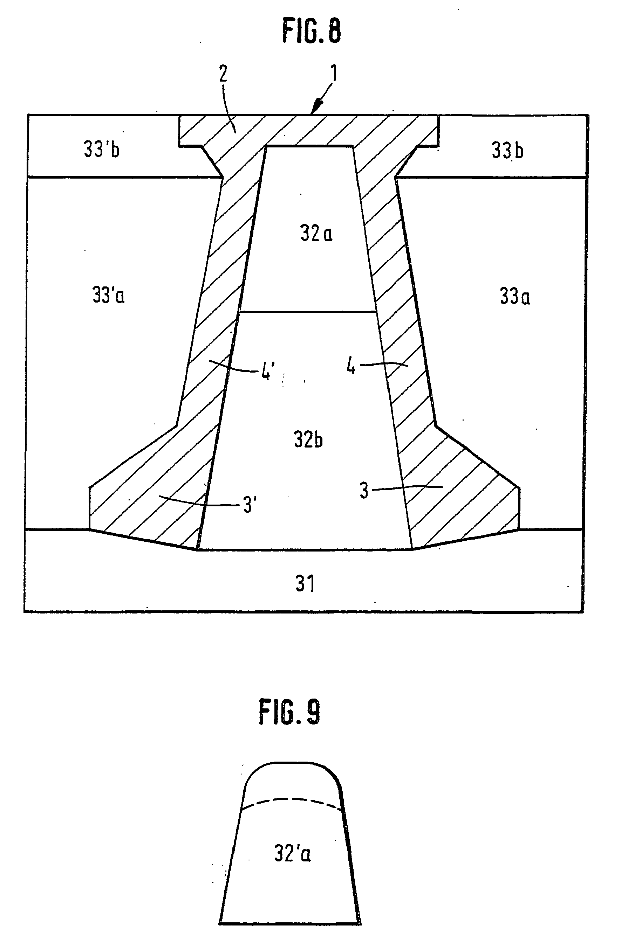

In Figur 7 ist eine weitere Alternative eines Trägers 1 im Querschnitt dargestellt. Bei diesem Träger 1 besteht der Untergurt aus einem einzigen Bauteil, während die Obergurte 2, 2' getrennt ausgeführt sind. Der Hohlraum ist bei dieser Ausführung von der Oberseite des Trägers 1 her zugänglich. Mittels einer Platte 7 ist der Hohlraum des Trägers 1 verschlossen. In den Gurten 2, 2' und 3 sind jeweils in den äußeren Bereichen Spannbewehrungen 9 angeordnet. Durch die Anordnung der Spannbewehrungen 9 im äußeren Bereich der Gurte 2, 2' und 3 ist insbesondere wenn die Spannbewehrungen 9 derart ausgebildet sind, daß sie auch nach dem Einbau des Trägers 1 noch zugänglich sind, eine Justierung des Trägers 1 in y- und z-Richtung möglich. Diese Justierung in y- und z-Richtung erfolgt durch ein entsprechendes Nachspannen der einzelnen Spannbewehrungen 9, wodurch der Träger 1 in vorbestimmter Weise verzogen wird. Auf diese Weise kann beispielsweise bei Senkungen des Untergrundes oder anderen Veränderung in der Trassierung eine exakte Einstellung des Trägers 1 auf die Erfordernisse des Fahrweges Einfluß vorgenommen werden. Die Einstellung kann in besonders feinfühliger und exakter Weise durch den Einsatz temperaturabhängig gesteuerter Pressen erfolgen, die zur Kompensation der Verformung des Trägers 1 durch einseitige Erwärmung die relevanten Spannglieder 9 entsprechend mehr oder weniger anspannen. Die Pressen können beispielsweise mit entsprechenden Solarzellen verbunden sein. Figur 8 zeigt die Skizze einer modulartig aufgebauten Schalung für einen Träger 1 im Querschnitt. Die Schalung besteht aus einem Grundrahmen 31, auf welchem die weiteren Schalungsmodule aufgebaut sind. Die weiteren Schalungsmodule bestehen aus den Kernteilen 32a und 32b sowie den Seitenschalungen 33a, 33'a sowie 33b und 33'b. Die einzelnen Module sind aneinandergesetzt und können mit relativ geringem Aufwand gegen andersartige Module ausgetauscht werden. Darüber hinaus ist es möglich, Füllstücke einzusetzen, mit welchen Aussparungen in dem Träger 1 erhalten werden.

In Figur 9 ist ein alternatives Kernstück 32'a für die Schalung der Figur 8 dargestellt. Durch Austausch des Kernstücks 32a durch das Kernstück 32'a wird ein Träger 1 erhalten, welcher kurze Schotten 13 aufweist. Die kurzen Schotten 13, welche durch Aussparungen in dem Kernstück 32'a (dargestellt durch die gestrichelte Linie) erhalten werden, entsprechen sodann im wesentlichen einer Gestaltung gemäß den Darstellungen der Figur 5 bzw. 6.

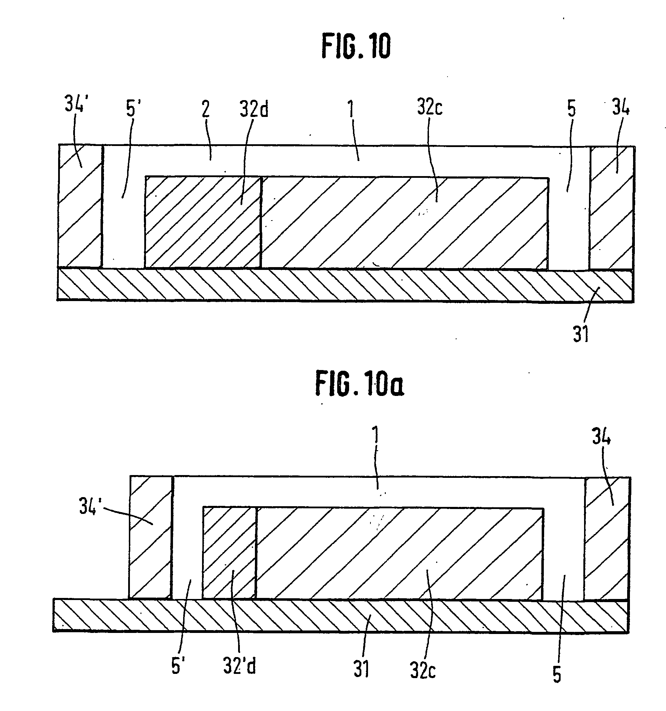

In Figur 10 ist ein Längsschnitt eines Trägers 1 mit dessen Schalung skizziert dargestellt. Auf dem Grundrahmen 31 sind Kernteile 32c und 32d sowie Stirnschalungen 34 und 34' aufgebaut. Mit einem derartigen Aufbau der einzelnen Schalungsmodule wird ein Träger 1 mit einer bestimmten Länge hergestellt. Wird ein beispielsweise kürzerer Träger 1 benötigt, so wird gemäß Figur 10a das Kernstück 32d durch das Kernstück 32'd ersetzt und die Stirnschalung 34' entsprechend der gewünschten Länge des Trägers 1 versetzt auf dem Grundrahmen 31 angeordnet. Es ist daraus ersichtlich, daß es durch lediglich zwei sehr einfache Montagearbeiten möglich ist unterschiedliche Träger 1 zu schaffen. Dies weist den erheblichen Vorteil auf, daß beim Bau einer Vielzahl von Trägern 1 für eine bestimmte Trasse auf sehr einfache Weise individuelle Träger 1 hergestellt werden können, ohne jeweils große Umbaumaßnahmen an der Schalung vornehmen zu müssen.

Um Verspannungen zwischen den Kernstücken 32c und 32d beim Entspannen der Bewehrung für den Träger 1 zu vermeiden, ist vorgesehen, daß die Kernstücke 32c und 32d beweglich zueinander angeordnet sind. Hierdurch ist ein Verspreizen der Kernstücke 32c und 32d in dem entspannten Träger 1 nicht zu befürchten.

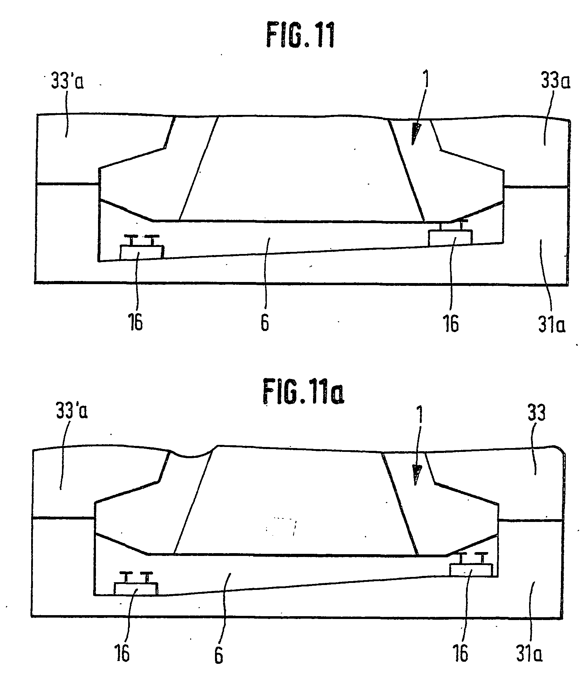

Figur 11 und 11a zeigen einen Ausschnitt einer Schalung im Bereich der Auflagerkonsolen 6. Um beispielsweise eine Neigung des Trägers 1 auf vorgefertigten Stützen zu ermöglichen, kann vorgesehen sein, daß die Auflagerkonsole 6 nicht orthogonal zu der Achse des Trägers 1 verläuft. Um dies zu erreichen, ist wiederum ein Schalungsmodul 31a des Grundrahmens 31 vorgesehen. Bei dem in Figur 11 dargestellten Modul 31a ist eine leichte Neigung des Trägers 1 erwünscht. In der Auflagerkonsole 6 sind für die Lagerung des Trägers 1 Lagerplatten 16 angeordnet. Die Lagerplatten 16 sind jeweils mit Kopfbolzen in dem Beton der Auflagerkonsole 6 verankert.

Gemäß der Ausführung der Figur 11a ist das Modul 31'a derart ausgebildet, daß die Lagerplatten 16 parallel, aber höhenversetzt zueinander verlaufen. Auch dies ist wiederum durch einfachen Austausch eines Moduls an dem Grundrahmen 31 zu bewirken.

Alternativ oder zusätzlich zu den hier dargestellten Ausführungen der Schalung ist es ebenso möglich, daß auf einem Grundrahmen 31 mehrere Träger 1 angeordnet werden. So ist es beispielsweise möglich, daß auf einem Grundrahmen 31 entweder ein langer oder beispielsweise zwei kurze Träger 1 gefertigt werden. Dies kann dadurch bewirkt werden, daß unterschiedliche Kernteile 32 und zusätzliche Stirnschalungen 34 verwendet werden, welche auf dem Grundrahmen 31 aufgebaut werden.

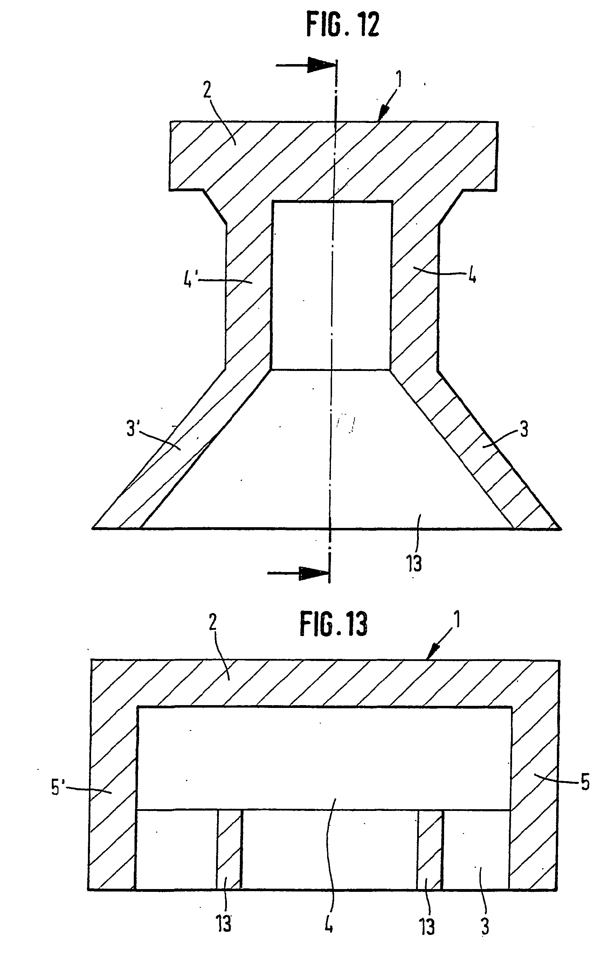

In Figur 12 ist eine weitere Ausführungsform des erfindungsgemäßen Trägers 1 dargestellt. An den Obergurt 2, welcher quer zur Längsachse des Trägers 1 verläuft, und an dessen Enden in nicht dargestellter Weise beispielsweise Konsolen für die Befestigung der Funktionsebenen für das Magnetschwebefahrzeug angeordnet werden, sind zwei Stege 4, 4' beabstandet angeordnet. Zwischen den beiden Stegen 4, 4' entsteht ein Hohlraum des Trägers 1, welcher im wesentlichen durch die ganze Länge des Trägers 1 hindurch verläuft. Dies Hohlraum könnte allerdings auch zur weiteren Verstärkung des Trägers 1 mit Schotten unterbrochen sein. Am vom Obergurt 2 beabstandeten Ende der Stege 4, 4' sind Untergurte 3, 3' angeordnet. Die Untergurte 3, 3' erstrecken sich zur Außenseite des Trägers 1 hin. Die Untergurte 3, 3' weisen etwa die gleiche Wandstärke wie die Stege 4, 4' auf. Durch die abgespreizte Form der Untergurte 3, 3' wird eine erhöhte Steifigkeit des Trägers 1 erzielt. Durch eine entsprechend steile Ausbildung der äußeren Oberfläche der Untergurte 3, 3' wird bewirkt, daß Schnee und Eis weniger anhaften können. Der Winterfahrbetrieb ist dadurch problemloser möglich. Die Untergurte 3, 3' sind mit Schotten 13 verbunden. Auch dies trägt zur weiteren Steifigkeitserhöhung des Trägers 1 bei. Die Schotten 13 sind in Längsrichtung des Träges 1 vereinzelt angeordnet.

Hergestellt werden die Schotten 13 entweder in einem dem eigentlichen Herstellungsvorgang des Trägers 1 nachfolgenden Arbeitsschritt. Alternativ kann vorgesehen sein, daß durch eine entsprechende Teilung der Schalung einzelne Module der Schalung, welche oberhalb der Schotten 13 in dem Hohlraum des Trägers 1 angeordnet sind, bei der Entformung in Längsrichtung des Trägers 1 bewegt werden und somit in den Hohlraum zwischen den einzelnen Schotten 13 gelangen und dann aus dem Träger 1 entnommen werden können. Durch die erfindungsgemäße Teilung der Schalung in einzelne Module ist diese Längsverschiebung der entsprechenden Schalungsmodule sehr einfach durchzuführen. Ein weiterer Arbeitsschritt zur Herstellung des mit den Schotten 13 versehenen Trägers 1 ist daher nicht erforderlich. Die Herstellung des Trägers 1 kann dadurch schnell und kostengünstig erfolgen. Die gleiche Herstellungsmethode mit Hilfe der in Modulen aufgeteilten Schalung kann eingesetzt werden zur Herstellung von nicht dargestellten Bodenplatten 7, welche nur an einem Teil des Trägers 1 angeordnet sind. Auch hierbei kann durch eine Längsverschiebung der Schalung der Hohlraum oberhalb der Bodenplatte 7 beibehalten werden und das entsprechende Schalungsmodul seitlich neben der Bodenplatte 7 aus dem Träger 1 entnommen werden. Auch hierdurch ist eine sehr schnelle und kostengünstige Herstellung eines Trägers mit integrierter Bodenplatte 7 möglich.

Figur 13 zeigt einen Schnitt durch den Träger der Figur 12 entlang der strichpunktierten Linie. Es ist hieraus ersichtlich, daß die Schotten 13 lediglich am unteren Teil des Trägers 1 im Bereich der Untergurte 3, 3' angeordnet sind. Im Bereich der Stege 4, 4' entsteht ein Hohlraum innerhalb des Trägers 1. Dieser Hohlraum bewirkt, daß für die Herstellung des Trägers 1 lediglich ein geringer Materialbedarf erforderlich ist. Darüber hinaus ist durch den Hohlraum ein Raum geschaffen, in welchem Versorgungsleitungen verlegt werden können. Der Träger 1 ist durch Abschlußplatten 5, 5' in Längsrichtung abgeschlossen. In den Abschlußplatten 5, 5' können, in nicht dargestellter Weise, Verankerungen von Spanngliedern oder Verbindungselemente zu weiteren Trägern 1 vorgesehen sein.

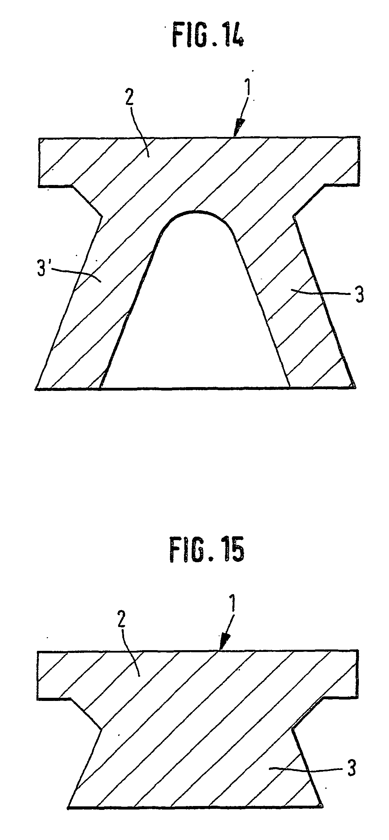

In den Figuren 14 und 15 sind weitere Ausführungsformen von Trägem dargestellt, welche durch die Modulbauweise der Schalung sehr schnell und kostengünstig hergestellt werden können. Durch Austausch einzelner Schalungsbereiche ist es möglich eine Vielzahl unterschiedlicher Träger 1, welche einander ähnlich sind, zu schaffen. Dies erfolgt durch Einsatz veränderter Schalungsmodule. So ist gemäß Figur 14 ein niedriger Träger 1 herstellbar, welcher lediglich einen Obergurt 2 und Untergurt 3, 3' aufweist. Derartige Träger 1 können beispielsweise bei Brückenbauwerken eingesetzt werden.

Für die Verlegung des Fahrweges ohne Stützen ist es häufig ausreichend, wenn der Träger 1 sehr niedrig ausgebildet ist. Hierzu kann es vorteilhaft sein, daß der Träger 1 ohne Hohlraum gegossen wird. Auch dies ist durch die erfindungsgemäße Schalung ohne weiteres möglich, da entsprechende Schalungsmodule aus der Schalung entfernt werden können und somit ein niedriger vollvolumiger Träger 1 geschaffen werden kann.

Weitere, nicht dargestellte Ausführungsbeispiele sind ebenfalls erfindungsgemäß. So ist es durchaus möglich, daß mehrere Schotten 10 als hier dargestellt mit und ohne Bodenplatte 7 eingesetzt werden. Die Schotten 10 können entweder vollwandig oder mit Durchgangsöffnungen versehen sein. Vorteilhaft ist es, wenn die Schotten 10 ebenso wie die Abschlußplatten 5, 5' Entformschrägen aufweisen, so daß eine Schalung in Einbaurichtung des Trägers 1 nach unten aus dem Träger 1 entnommen werden kann. Die Bodenplatte 7 kann aus Beton oder aus Metall sein, sie kann ebenfalls Öffnungen, beispielsweise zu Inspektionszwecken oder zum Entfernen von Schalungen aufweisen. Sie kann einbetoniert oder beispielsweise eingeschraubt sein. Durch eine entsprechende Formgebung der Verbindungsstellen kann eine schubfeste Verbindung zwischen der Bodenplatte und dem Träger geschaffen werden. Die Bodenplatte 7 kann derart hergestellt werden, daß von außen eine Schalung angelegt wird und mittels Schläuchen Beton in den Hohlraum eingeführt wird und die Bodenplatte bildet. Die Bodenplatte 7 kann beispielsweise aber auch dadurch hergestellt werden, daß der Träger 1 in ein Betonbett eingesetzt wird, welches durch aus dem Träger 1 überstehende Bewehrungseisen nach dem Abbinden fest mit dem Träger 1 verbunden ist und den Hohlraum abschließt.

Zur Verformung des Trägers kann eine gezielte Erwärmung der Spannbewehrung erfolgen, wodurch die erforderlichen, zulässigen Toleranzen des Trägers eingehalten werden können.

## Patentansprüche

1. Träger für einen Fahrweg eines spurgebundenen Fahrzeuges, insbesondere einer Magnetschwebebahn, aus Beton, insbesondere als Betonfertigteil, mit einem in Längsrichtung des Trägers (1) verlaufenden ersten Gurt (2), daran angeordneten, ebenfalls in Längsrichtung des Trägers (1) verlaufenden Stegen (4, 4') und mit einem am vom ersten Gurt (2) beabstandeten Ende der Stege (4, 4') angeordneten zweiten Gurt (3, 3'), wobei an den im Querschnitt des Trägers (1) voneinander beabstandeten Enden eines der Gurte (2, 3, 3') Anbauteile zum Führen des Fahrzeuges anordenbar sind, **dadurch gekennzeichnet, dass** an jedem vom ersten Gurt (2) beabstandeten Ende der Stege (4, 4') jeweils ein zweiter Gurt (3, 3') angeordnet ist, wobei sich diese zweiten Gurte (3, 3') ausgehend von dem Ende der Stege (4, 4') im wesentlichen zur Außenseite des Trägers (1) hin erstrecken.

2. Träger nach Anspruch 1, **dadurch gekennzeichnet, dass** die Stege (4, 4') im Bereich der zweiten Gurte (3, 3') weiter voneinander beabstandet sind als im Bereich der ersten Gurte (2), so dass der Träger (1) bei dessen Herstellung zumindest teilweise von der Seite der zweiten Gurte (3, 3') entformbar ist.

3. Träger nach einem der vorherigen Ansprüche, **dadurch gekennzeichnet, dass** der erste Gurt (2) ein Ober- oder Untergurt (2) und die zweiten Gurte (3, 3') Unter- oder Obergurte (3, 3') des Trägers (1) sind.

4. Träger nach einem der vorherigen Ansprüche, **dadurch gekennzeichnet, dass** sich der Querschnittsschwerpunkt des Trägers (1) im Bereich der mittleren Querschnittshöhe befindet.

5. Träger nach einem der vorherigen Ansprüche, **dadurch gekennzeichnet, dass** an den Enden des Trägers (1) die Stege (4, 4') miteinander verbindende Abschlussplatten (5, 5') angeordnet sind.

6. Träger nach einem der vorherigen Ansprüche, **dadurch gekennzeichnet, dass** an den Abschlussplatten (5, 5') Auflagerkonsolen (6, 6') für den Träger (1) angeordnet sind.

7. Träger nach einem der vorherigen Ansprüche, **dadurch gekennzeichnet, dass** in dem Hohlraum wenigstens ein die Stege (4, 4') miteinander verbindendes Schott (13) angeordnet ist.

8. Träger nach einem der vorherigen Ansprüche, **dadurch gekennzeichnet, dass** die Schotten (13) im Bereich einer Quervorspannung des Trägers (1), und/oder im Bereich der Anbauteile, insbesondere Konsolen (14) zum Führen des Fahrzeuges angeordnet sind.

9. Träger nach einem der vorherigen Ansprüche, **dadurch gekennzeichnet, dass** die Schotten (13) lediglich einen Teil der Stege (4, 4') miteinander verbinden.

10. Träger nach einem der vorherigen Ansprüche, **dadurch gekennzeichnet, dass** die zweiten Gurte (3, 3') im Bereich des Hohlraumes zumindest teilweise durch eine nach dem Herstellen des Trägers (1) angeordnete Bodenplatte (7) miteinander verbunden sind.

11. Träger nach einem der vorherigen Ansprüche, **dadurch gekennzeichnet, dass** die Bodenplatte (7) betoniert ist.

12. Träger nach einem der vorherigen Ansprüche, **dadurch gekennzeichnet, dass** die Bodenplatte (7) aus Metall, Kunststoff oder Beton, insbesondere in Form einer Rahmen-Konstruktion ist.

13. Träger nach einem der vorherigen Ansprüche, **dadurch gekennzeichnet, dass** die Bodenplatte (7) zumindest teilweise tragend ausgebildet ist.

14. Träger nach einem der vorherigen Ansprüche, **dadurch gekennzeichnet, dass** die Bodenplatte (7) torsionsfest mit dem Träger (1) verbunden ist.

15. Träger nach einem der vorherigen Ansprüche, **dadurch gekennzeichnet, dass** in dem Träger (1) Vorspannelemente angeordnet sind.

16. Träger nach einem der vorherigen Ansprüche, **dadurch gekennzeichnet, dass** in den Außenbereichen der Gurte (2;3,3') eine Spannbewehrung (9) ohne Verbund angeordnet ist.

17. Träger nach einem der vorherigen Ansprüche, **dadurch gekennzeichnet, dass** im Hohlraum zentrische Spannglieder angeordnet sind.

18. Träger nach einem der vorherigen Ansprüche, **dadurch gekennzeichnet, dass** die zentrischen Spannglieder thermisch isoliert sind.

19. Träger nach einem der vorherigen Ansprüche, **dadurch gekennzeichnet, dass** in wenigstens einer der Abschlussplatten (5, 5'), insbesondere im Bereich des Hohlraumes Spann-Nischen (11) vorgesehen sind.

20. Träger nach einem der vorherigen Ansprüche, **dadurch gekennzeichnet, dass** in wenigstens einer der Abschlussplatten (5, 5'), insbesondere im Bereich des Hohlraumes Stahlplatten (10) zum Abstützen von Spannpressen für die Vorspannelemente vorgesehen sind.

21. Träger nach einem der vorherigen Ansprüche, **dadurch gekennzeichnet, dass** der Träger (1) Teil eines Mehrfeldträgers ist, wobei mehrere Träger (1) formtreu vorgespannt miteinander verbunden sind.

22. Träger nach einem der vorherigen Ansprüche, **dadurch gekennzeichnet, dass** der erste Gurt und/oder die zweiten Gurte (2, 3, 3') bezüglich des Fahrzeuges strömungsgünstig, unter weitgehender Vermeidung von dem Fahrzeug zugewandten Querschnittsveränderungen, ausgebildet ist.

23. Träger nach einem der vorherigen Ansprüche, **dadurch gekennzeichnet, dass** die sonnenbeschienenen Flächen und/oder Massen des Trägers (1) an dem ersten Gurt (2) und den zweiten Gurten (3, 3') ähnlich sind zum Erhalt eines niedrigen Temperaturgradienten.

24. Träger nach einem der vorherigen Ansprüche, **dadurch gekennzeichnet, dass** zumindest Teile der Außenseite des Trägers (1) eine wärmeabsorbierende und/oder -reflektierende Oberfläche aufweisen.

25. Träger nach einem der vorherigen Ansprüche, **dadurch gekennzeichnet, dass** zumindest Teile der Außenseite des Trägers (1) einen Anstrich aufweisen.

26. Träger nach einem der vorherigen Ansprüche, **dadurch gekennzeichnet, dass** zumindest Teilen der Außenseite des Trägers (1) Beschattungselemente zugeordnet sind. ,

27. Träger nach einem der vorherigen Ansprüche, **dadurch gekennzeichnet, dass** der erste oder die zweiten Gurte (2, 3, 3') als Fahrweg für weitere Fahrzeuge, insbesondere Montage-, Inspektions- oder Hilfsfahrzeuge ausgebildet sind.

28. Träger nach einem der vorherigen Ansprüche, **dadurch gekennzeichnet, dass** zwischen erstem Gurt und zweitem Gurt Mittel zum Wärmeausgleich, insbesondere zum Wärmetausch vorgesehen sind.

29. Träger nach einem der vorherigen Ansprüche, **dadurch gekennzeichnet, dass** zum Wärmeausgleich ein Steuerungs- oder Regelungssystem, insbesondere mit Sensoren und Pumpen vorgesehen ist.

30. Träger nach einem der vorherigen Ansprüche, **dadurch gekennzeichnet, dass** die Mittel zum Wärmeausgleich Leitungen mit Wärmeträgerflüssigkeit, insbesondere Öl, welche aktiv oder passiv durch die Leitungen zirkuliert, sind.

31. Träger nach einem der vorherigen Ansprüche, **dadurch gekennzeichnet*,* dass** die Mittel zum Wärmeausgleich Kühl- und/oder Heizelemente sind.

32. Träger nach einem der vorherigen Ansprüche, **dadurch gekennzeichnet, dass** mittels temperaturabhängig gesteuerter Pressen der Träger (1) insbesondere durch einseitige Erwärmung der relevanten Spannglieder (9) verformbar ist.

33. Träger nach einem der vorherigen Ansprüche, **dadurch gekennzeichnet, dass** die Pressen mit entsprechenden Solarzellen und/oder Sonnenkollektoren verbunden sind.

34. Schalung zur Herstellung eines Trägers (1) nach einem der vorherigen Ansprüche, **dadurch gekennzeichnet, dass** die Schalung aus einzelnen Modulen (31, 32, 33, 34) zusammengesetzt ist, so dass durch Auswechselung einzelner Module eine Vielzahl unterschiedlicher Träger (1) herstellbar ist.

35. Schalung nach dem vorherigen Anspruch, **dadurch gekennzeichnet, dass** die Module zum Längenausgleich bei der Entspannung der Spannglieder während des Entformens verschieblich miteinander verbunden sind.

36. Schalung nach einem der vorherigen Ansprüche, **dadurch gekennzeichnet, dass** die Module unterschiedliche Auflagerkonsolen ermöglichen.

37. Schalung nach einem der vorherigen Ansprüche, **dadurch gekennzeichnet, dass** die Module im Bereich der Auflagerkonsolen mit Lagerplatten (16) ausgestattet sind.

38. Schalung nach einem der vorherigen Ansprüche, **dadurch gekennzeichnet, dass** die Module im Bereich der Auflagerkonsolen Aussparungen mit Verguss- und Entlüftungsöffnungen zur Aufnahme der Lagerung aufweisen.

39. Schalung nach einem der vorherigen Ansprüche, **dadurch gekennzeichnet, dass** die Module unterschiedliche Trägerlängen ermöglichen.

40. Schalung nach einem der vorherigen Ansprüche, **dadurch gekennzeichnet, dass** die Module unterschiedliche Hohlraumgestaltungen ermöglichen.

41. Schalung nach einem der vorherigen Ansprüche, **dadurch gekennzeichnet, dass** die Module hinsichtlich Anzahl, Form und Größe unterschiedliche Schotten (13) ermöglichen.

## Claims

1. A support (hereinafter "beam") for a travel-way for a track guided vehicle, in particular a magnetically levitated railway, of concrete, in particular a pre-cast concrete component, having a first flange (2) running in the longitudinal direction of the beam (1), webs (4, 4') likewise running in the longitudinal direction of the beam (1), which are arranged at said first flange (2) and a second flange (3, 3'), located on that end of the webs (4, 4') remote from the first flange (2), whereby, added construction parts for the guidance of a vehicle can be placed on the ends of one of the flanges (2, 3, 3'), which ends are distanced from one another in the cross section of the beam, **characterized in that** on each end of the webs (4, 4') remote from the first flange (2), respectively, a second flange (3, 3') is placed, whereby these second flanges (3, 3') starting from the end of the webs (4, 4') extend essentially to the outside of the beam (1).

2. A beam according to Claim 1, **characterized in that** the webs (4, 4') in the area of the second flanges (3, 3') are further distanced from one another than in the area of the first flanges (2) so that the beam (1), when being manufactured, can be released from the mold at least partially from the side of the second flanges (3, 3').

3. A beam according to one of the foregoing claims, **characterized in that** the first flange (2) is an upper or lower flange (2) and the second flanges (3, 3') are lower or upper flanges (3, 3') of the beam (1).

4. A beam according to one of the foregoing claims, **characterized in that** the cross sectional center of gravity of the beam (1) is to be found in the area of the mean height of the cross section.

5. A beam according to one of the foregoing claims, **characterized in that** closure plates (5, 5'), which connect the webs (4, 4') with one another are placed on the ends of the beam (1)

6. A beam according to one of the foregoing claims, **characterized in that** on the closure plates (5, 5') are placed bearing console plates (6, 6') for the beam (1).

7. A beam according to one of the foregoing claims, **characterized in that** in the hollow space at least one bulkhead (13) is placed, which connects the webs (4, 4').

8. A beam according to one of the foregoing claims, **characterized in that** the bulkheads (13) are placed in the area of a transverse pretensioning member of the beam (1), and/or in the area of the add-on fixtures, especially the consoles (14) for the guidance of the vehicle.

9. A beam according to one of the foregoing claims, **characterized in that** the bulkheads (13) connect just a part of the webs (4, 4').

10. A beam according to one of the foregoing claims, **characterized in that** the second flanges (3, 3') are at least partially connected in the area of the hollow space, by means of a bottom plate (7), which is arranged after the manufacture of the beam (1).

11. A beam according to one of the foregoing claims, **characterized in that** the bottom plate (7) is made of concrete.

12. A beam according to one of the foregoing claims, **characterized in that** the bottom plate (7) consists of metal, plastic, or concrete, especially in the shape of a framelike construction.

13. A beam according to one of the foregoing claims, **characterized in that** the bottom plate (7) is designed as at least partially a load bearing plate.

14. A beam according to one of the foregoing claims, **characterized in that** the bottom plate (7) is so connected to the beam (1) as to resist torsion therewith.

15. A beam according to one of the foregoing claims, **characterized in that** in the beam (1) pretensioning elements are arranged.

16. A beam according to one of the foregoing claims, **characterized in that** in the outer zones of the flanges (2; 3, 3') is placed a tension reinforcement rod (9) without connection.

17. A beam according to one of the foregoing claims, **characterized in that** central tension members are placed in the hollow space.

18. A beam according to one of the foregoing claims, **characterized in that** the central tension members are thermally insulated.

19. A beam according to one of the foregoing claims, **characterized in that** in at least one of the closure plates (5, 5'), especially in the area of the hollow space, tension recesses (11) are provided.

20. A beam according to one of the foregoing claims, **characterized in that** in at least one of the closure plates (5, 5'), especially in the area of the hollow space, steel plates (10) for the anchorage of the tension bars for the pretensioning elements are provided.

21. A beam according to one of the foregoing claims, **characterized in that** the beam (1) is a part of a multicompartment beam, wherein a plurality of precisely aligned beams (1) are connected together in a pretensioned manner.

22. A beam according to one of the foregoing claims, **characterized in that** the first flange and/or the second flanges (2, 3, 3') are designed to be airflow favorable in regard to the vehicle with predominant avoidance of cross-sectional changes attributable to the vehicle.

23. A beam according to one of the foregoing claims, **characterized in that** the surfaces and/or the bulk of the beam (1) on the first flange (2) and on the second flanges (3, 3') which are exposed to sun radiation are similar to have a low temperature gradient.

24. A beam according to one of the foregoing claims, **characterized in that** at least parts of the outside of the beam (1) possess a heat absorbing and/or reflecting surface.

25. A beam according to one of the foregoing claims, **characterized in that** at least parts of the outside of the beam (1) possess a coat of paint.

26. A beam according to one of the foregoing claims, **characterized in that** shading elements are assigned to at least parts of the outside of the beam (1).

27. A beam according to one of the foregoing claims, **characterized in that** the first flange or the second flanges (2, 3, 3') is/are designed to be a travel-way for further vehicles, especially vehicles for construction, inspection or assistance.

28. A beam according to one of the foregoing claims, **characterized in that** between a first flange and a second flange means for heat compensation, in particular means for heat transfer, is provided.

29. A beam according to one of the foregoing claims, **characterized in that** for heat equalization a control and regulatory system, in particular with sensors and pumps is provided.

30. A beam according to one of the foregoing claims, **characterized in that** the means for heat equalization are lines with heat transfer liquids, especially oil, which circulate either actively or passively through the said lines.

31. A beam according to one of the foregoing claims, **characterized in that** the means for heat equalization are cooling and/or heating elements.

32. A beam according to one of the foregoing claims, **characterized in that** by means of temperature dependent controlled compression, especially by single side warming of the relevant tensioning members (9), the beam (1) is deformable.

33. A beam according to one of the foregoing claims, **characterized in that** the compression is connected with appropriate solar cells and/or sun collectors.

34. A mold for the manufacturing of a beam (1) according to one of the foregoing claims, **characterized in that** the mold is composed of individual modules (31, 32, 33, 34), so that by the exchanging of individual modules a plurality of differing beams (1) can be manufactured.

35. A mold according to the foregoing claim, **characterized in that** the modules for the compensation of length upon the release of the tension members during the demolding are slidably connected with one another.

36. A mold according to one of the foregoing claims, **characterized in that** the modules make possible various bearing consoles.

37. A mold according to one of the foregoing claims, **characterized in that** the modules in the area of the bearing consoles are equipped with bearing plates (16).

38. A mold according to one of the foregoing claims, **characterized in that** the modules in the area of the bearing consoles possess recesses with grout and aeration openings for the reception of the bearing.

39. A mold according to one of the foregoing claims, **characterized in that** the modules make possible differing beam lengths.

40. A mold according to one of the foregoing claims, **characterized in that** the modules make possible different formulations of hollow space.

41. A mold according to one of the foregoing claims, **characterized in that** the modules make possible differing bulkheads (13) in regard to number, shape and size.

## Revendications

1. Support pour une voie de circulation d'un véhicule guidé, particulièrement un train à suspension magnétique, en béton, se présentant particulièrement sous la forme d'un élément de construction préfabriqué en béton, comportant une première membrure (2) s'étendant dans le sens longitudinal du support (1), laquelle comporte des entretoises (4, 4') s'étendant également dans le sens longitudinal du support (1), et comportant une deuxième membrure (3, 3') disposée à l'extrémité des traverses (4, 4') distancée de la première membrure (2), sachant que des éléments rapportés peuvent être disposés aux extrémités de l'une des membrures (2, 3, 3') distancées l'une de l'autre dans la section transversale du support (1) pour guider le véhicule, **caractérisé en ce qu'**une deuxième membrure (3, 3') est disposée respectivement à chaque extrémité des entretoises (4, 4') distancée de la première membrure (2), sachant que ces deuxièmes membrures (3, 3') s'étendent essentiellement vers la face extérieure du support (1) à partir de l'extrémité des entretoises (4, 4').

2. Support selon la revendication 1, **caractérisé en ce que** les entretoises (4, 4') sont plus éloignées les unes des autres dans la zone des deuxièmes membrures (3, 3') que dans la zone des premières membrures (2), si bien que le support (1), lors de sa fabrication, peut être démoulé au moins partiellement par le côté des deuxièmes membrures (3, 3').

3. Support selon l'une quelconque des revendications précédentes, **caractérisé en ce que** la première membrure (2) est une membrure supérieure ou inférieure (2) du support (1) et que les deuxièmes membrures (3, 3') sont des membrures inférieures ou supérieures (3, 3') du support (1).

4. Support selon l'une quelconque des revendications précédentes, **caractérisé en ce que** le centre de gravité de la section transversale du support (1) est situé dans la zone de la hauteur de section transversale moyenne.

5. Support selon l'une quelconque des revendications précédentes, **caractérisé en ce que** des plaques terminales (5, 5') reliant réciproquement les entretoises (4, 4') sont disposées aux extrémités du support (1).

6. Support selon l'une quelconque des revendications précédentes, **caractérisé en ce que** des consoles d'appui (6, 6') pour le support (1) sont disposées aux plaques terminales (5, 5').

7. Support selon l'une quelconque des revendications précédentes, **caractérisé en ce que** qu'au moins une cloison (13) reliant réciproquement les entretoises (4, 4') est disposée dans l'espace vide.

8. Support selon l'une quelconque des revendications précédentes, **caractérisé en ce que** les cloisons (13) sont disposées dans la zone d'une précontrainte transversale du support (1) et/ou que, dans la zone des éléments rapportés, particulièrement des consoles (14) sont disposées pour guider le véhicule.

9. Support selon l'une quelconque des revendications précédentes, **caractérisé en ce que** les cloisons (13) ne relient réciproquement qu'une partie des entretoises (4, 4').

10. Support selon l'une quelconque des revendications précédentes, **caractérisé en ce que** les deuxièmes membrures (3, 3') sont reliées réciproquement dans la zone de l'espace vide au moins partiellement par une plaque d'assise (7) mise en place après la réalisation du support (1).

11. Support selon l'une quelconque des revendications précédentes, **caractérisé en ce que** la plaque d'assise (7) est bétonnée.

12. Support selon l'une quelconque des revendications précédentes, **caractérisé en ce que** la plaque d'assise (7) est réalisée en métal, en matière synthétique ou en béton, particulièrement sous la forme d'une construction à portique.

13. Support selon l'une quelconque des revendications précédentes, **caractérisé en ce que** la plaque d'assise (7) se présente sous une forme au moins partiellement porteuse.

14. Support selon l'une quelconque des revendications précédentes, **caractérisé en ce que** la plaque d'assise (7) est reliée au support (1) de manière résistante à la torsion.

15. Support selon l'une quelconque des revendications précédentes, **caractérisé en ce que** des éléments de précontrainte sont disposés dans le support (1).

16. Support selon l'une quelconque des revendications précédentes, **caractérisé en ce qu'**une armature de précontrainte (9) est disposée sans assemblage dans les zones extérieures des membrures (2; 3, 3').

17. Support selon l'une quelconque des revendications précédentes, **caractérisé en ce que** des membres de précontrainte centrés sont disposés dans l'espace vide.

18. Support selon l'une quelconque des revendications précédentes, **caractérisé en ce que** les membres de précontrainte centrés sont à isolation thermique.

19. Support selon l'une quelconque des revendications précédentes, **caractérisé en ce que** des niches de précontrainte (11) sont prévues dans au moins une des plaques terminales (5, 5'), particulièrement dans la zone de l'espace vide.

20. Support selon l'une quelconque des revendications précédentes, **caractérisé en ce que** des plaques en acier (10) sont prévues dans au moins une des plaques terminales (5, 5'), particulièrement dans la zone de l'espace vide, pour soutenir des crics de précontrainte pour les éléments de précontrainte.

21. Support selon l'une quelconque des revendications précédentes, **caractérisé en ce que** le support (1) est une partie d'un support à travées multiples, sachant que plusieurs supports (1) sont reliés réciproquement sous précontrainte et avec stabilité dimensionnelle.

22. Support selon l'une quelconque des revendications précédentes, **caractérisé en ce que** la première membrure et/ou les deuxièmes membrures (2; 3, 3') se présentent sous une forme favorable à l'écoulement par rapport au véhicule, évitant quasi totalement les variations de section du côté du véhicule.

23. Support selon l'une quelconque des revendications précédentes, **caractérisé en ce que** les surfaces exposées au soleil et/ou les masses du support (1) à la première membrure (2) et aux deuxièmes membrures (3, 3') sont similaires pour permettre d'obtenir un gradient de température faible.

24. Support selon l'une quelconque des revendications précédentes, **caractérisé en ce qu'**au moins des parties de la face extérieure du support (1) comportent une surface absorbante et/ou réflectrice de chaleur.

25. Support selon l'une quelconque des revendications précédentes, **caractérisé en ce qu'**au moins des parties de la face extérieure du support (1) comportent une couche de peinture.

26. Support selon l'une quelconque des revendications précédentes, **caractérisé en ce que** des éléments d'ombrage sont attribués à au moins des parties de la face extérieure du support (1).

27. Support selon l'une quelconque des revendications précédentes, **caractérisé en ce que** la première ou les deuxièmes membrures (2; 3, 3') se présentent sous la forme d'une voie de circulation pour des véhicules supplémentaires, particulièrement des véhicules de montage, d'inspection ou de secours.

28. Support selon l'une quelconque des revendications précédentes, **caractérisé en ce que** des moyens sont prévus entre la première et la deuxième membrure pour la compensation de la température, particulièrement pour l'échange de chaleur.

29. Support selon l'une quelconque des revendications précédentes, **caractérisé en ce qu'**un système de commande ou de régulation, particulièrement avec des capteurs et des pompes, est prévu pour la compensation de la température.

30. Support selon l'une quelconque des revendications précédentes, **caractérisé en ce que** les moyens pour la compensation de la température sont des conduits avec un liquide caloporteur, particulièrement de l'huile, lequel circule activement ou passivement dans les conduits.

31. Support selon l'une quelconque des revendications précédentes, **caractérisé en ce que** les moyens pour la compensation de la température sont des éléments chauffants et/ou réfrigérants.

32. Support selon l'une quelconque des revendications précédentes, **caractérisé en ce que** le support (1) est déformable au moyen de presses à commande asservie à la température, particulièrement par l'échauffement unilatéral des membres de précontrainte (9) afférents.

33. Support selon l'une quelconque des revendications précédentes, **caractérisé en ce que** les presses sont reliées à des cellules photovoltaïques et/ou des collecteurs photovoltaïques appropriés.

34. Coffrage pour la fabrication d'un support (1) selon l'une quelconque des revendications précédentes, **caractérisé en ce que** le coffrage se compose de plusieurs modules individuels (31, 32, 33, 34), si bien qu'il est possible de fabriquer une grande variété de supports (1) différents par le remplacement de modules individuels.

35. Coffrage selon la revendication précédente, **caractérisé en ce que** les modules pour la compensation de la longueur sont reliés réciproquement de manière mobile lors de la détente de la tension des membres de précontrainte lors du démoulage.

36. Coffrage selon l'une quelconque des revendications précédentes, **caractérisé en ce que** les modules permettent des consoles d'appui différentes.

37. Coffrage selon l'une quelconque des revendications précédentes, **caractérisé en ce que** les modules sont équipés de plaques d'appui (16) dans la zone des consoles d'appui.

38. Coffrage selon l'une quelconque des revendications précédentes, **caractérisé en ce que** les modules comportent des évidements dans la zone des consoles d'appui, avec des ouvertures de scellement et de désaération, pour accueillir le scellement.

39. Coffrage selon l'une quelconque des revendications précédentes, **caractérisé en ce que** les modules permettent des longueurs de support différentes.

40. Coffrage selon l'une quelconque des revendications précédentes, **caractérisé en ce que** les modules permettent des aménagements d'espace vide différents.

41. Coffrage selon l'une quelconque des revendications précédentes, **caractérisé en ce que** les modules permettent des cloisons (13) différentes en nombre, forme et dimensions.
